# EUROPEAN PATENT APPLICATION

(11) **EP 4 700 460 A1**
(43) Date of publication of application: **25.02.2026**
(21) Application number: 23937311.1
(22) Date of filing: 18.12.2023
(51) Int. Cl.: G02F 1/03, G02B 6/12

(54) **CHIP, PHOTOELECTRIC MODULE AND OPTICAL COMMUNICATION APPARATUS**

(30) Priority: 17.05.2023 CN 202310559197
(71) Applicant: Huawei Technologies Co., Ltd., Shenzhen, Guangdong 518129 (CN)
(72) Inventor: SUN, Mengdie, Shenzhen, Guangdong 518129 (CN); CHEN, Hongmin, Shenzhen, Guangdong 518129 (CN); LI, Wei, Shenzhen, Guangdong 518129 (CN); CHEN, Xin, Shenzhen, Guangdong 518129 (CN); SUN, Shihao, Shenzhen, Guangdong 518129 (CN); KONG, Xi, Shenzhen, Guangdong 518129 (CN)
(74) Representative: Goddar, Heinz J.
(86) International application number: PCT/CN2023/139429
(87) International publication number: WO 2024/234640

(57) **Abstract**

A chip (10), an optical/electrical module, and an optical communication device are provided. The chip (10) includes a substrate (100), and a transmitter (111) and a receiver (112) that are located on a first side of the substrate (100). A quantity of side walls of the substrate (100) is greater than four, the transmitter (111) is located in a first region (1001) of the substrate (100), the receiver (112) is located in a second region (1002) of the substrate (100), the first region (1001) is adjacent to the second region (1002), and a part of the substrate (100) located in the first region (1001) has a first side wall (101) on a side that is of the first region (1001) and that faces the second region (1002), that is, a shape of the substrate (100) is not a rectangle. In addition, a part, of the first region (1001), that is located on a side that is of the first side wall (101) and that is away from the second region (1002) is a protruding part of the first region (1001) relative to the second region (1002), so that the first region (1001) and the second region (1002) form an abnormal-shaped region. The first region (1001) and the second region (1002) may be respectively designed based on an area of the transmitter (111) and an area of the receiver (112), and do not need to adapt to a regular rectangle of the chip (10). This reduces an area of the chip (10) to some extent, reduces an area waste of the chip (10), and reduces costs of the chip (10). This also reduces a size of the optical/electrical module, and expands application scenarios of the optical/electrical module.

## Description

This application claims priority to Chinese Patent Application No. 202310559197.1, filed with the China National Intellectual Property Administration on May 17, 2023 and entitled "CHIP, OPTICAL/ELECTRICAL MODULE, AND OPTICAL COMMUNICATION DEVICE", which is incorporated herein by reference in its entirety.

### TECHNICAL FIELD

This application relates to the field of integrated circuit manufacturing, and in particular, to a chip, an optical/electrical module, and an optical communication device.

### BACKGROUND

With the development of internet technologies, people's requirements for network bandwidth are surging. Flexible optical networks are proposed, coherent technologies are developed, and optical network integration is improved. This effectively meets the people's increasing requirements. With continuous improvement of integration of an optical communication system, an optical/electrical module is developing toward a high rate, miniaturization, low costs, low power consumption, and the like. The optical/electrical module may include at least one chip, and the chip may have a transmitter and a receiver. The transmitter and the receiver are used as core interfaces for conversion from an electrical domain to an optical domain and conversion from an optical domain to an electrical domain in an optical network, and are widely used in a large-capacity and long-distance coherent communication system. A form of the chip directly affects a size of the entire optical/electrical module. Currently, a shape of the chip is a rectangle, and there is an area waste. This is not conducive to reducing costs of the chip and the size of the optical/electrical module.

### SUMMARY

In view of this, embodiments of this application provide a chip, an optical/electrical module, and an optical communication device, to reduce an area waste of the chip and reduce costs of the chip.

A first aspect of embodiments of this application provides a chip, including a substrate, and a transmitter and a receiver that are located on a first side of the substrate. A quantity of side walls of the substrate is greater than four, the transmitter is located in a first region of the substrate, the receiver is located in a second region of the substrate, the first region is adjacent to the second region, and a part of the substrate located in the first region has a first side wall on a side that is of the first region and that faces the second region. In other words, a shape of the substrate is not a rectangle. In addition, a part, of the first region, that is located on a side that is of the first side wall and that is away from the second region is a protruding part of the first region relative to the second region, so that the first region and the second region form an abnormal-shaped region. In this way, the first region and the second region may be respectively designed based on an area of the transmitter and an area of the receiver, and do not need to adapt to a regular rectangle of the chip. This reduces an area of the chip to some extent, reduces an area waste of the chip, and reduces costs of the chip. This also correspondingly reduces a size of the optical/electrical module, and expands application scenarios of the optical/electrical module.

In some possible implementations, the substrate has a second side wall on a side that is of the first region and that is away from the second region, the first side wall is disposed opposite to a first part of the second side wall, and the substrate has a third side wall located between the first side wall and the second side wall in the first region.

The substrate has a fourth side wall on a side that is of the second region and that is away from the first region, the fourth side wall is disposed opposite to a second part of the second side wall, and the substrate has a fifth side wall located between the fourth side wall and the first side wall in the second region.

The substrate has a sixth side wall, a first part of the sixth side wall is disposed opposite to the third side wall, and a second part of the sixth side wall is disposed opposite to the fifth side wall.

In embodiments of this application, a surface of the substrate may be presented as an L-shaped substrate. In comparison with a rectangular substrate, the L-shaped substrate reduces the area of the chip, and reduces the area waste of the chip. More chips can be manufactured based on wafers with same areas, and a same quantity of chips need a smaller wafer area, thereby reducing costs for manufacturing the chips.

In some possible implementations, in a plane parallel to the surface of the substrate, a size of the first side wall is greater than or equal to half of a size of the second side wall.

In embodiments of this application, a size of the fourth side wall is less than or equal to half of the size of the second side wall, and two chips in a same wafer may be properly arranged and integrated into one rectangle, so that the more chips can be manufactured based on the wafers with the same areas.

In some possible implementations, on the first side of the substrate, an optical coupling interface is disposed on at least one of the first side wall and the fifth side wall, and the optical coupling interface is configured to connect to an optical fiber array unit.

In embodiments of this application, in this special interface design, the size of the optical/electrical module is a larger value of the following two values: a size of the first side wall in the plane parallel to the surface of the substrate, and a sum of a size of the fourth side wall in the plane parallel to the surface of the substrate and a size of an optical fiber array. In comparison with the size of the optical/electrical module being a sum of a size of the chip and the size of the optical fiber array, a size of an optical fiber module is reduced.

In some possible implementations, projection space of the optical coupling interface on the substrate has a hollow region.

In embodiments of this application, the hollow region can reduce light leakage at the optical coupling interface, and ensure strength of an optical signal.

In some possible implementations, the substrate further includes, in the first region, a seventh side wall and an eighth side wall that are connected between the fifth side wall and the first side wall; and/or
the substrate further includes, in the second region, a ninth side wall and a tenth side wall that are connected between the fifth side wall and the first side wall.

In embodiments of this application, based on the foregoing six side walls, only the seventh side wall and the eighth side wall may be added, or only the ninth side wall and the tenth side wall may be added, or the seventh side wall, the eighth side wall, the ninth side wall, and the tenth side wall may be added at the same time, so that the substrate is more diversified in shape.

In some possible implementations, the transmitter includes an electro-optic modulator, the electro-optic modulator includes a modulation waveguide and a modulation electrode pair on two sides of the modulation waveguide, and a material of the modulation electrode pair is transparent oxide.

In embodiments of this application, the transparent oxide features a low optical loss and a high conductivity, and therefore, light utilization can be improved. In addition, because the transparent oxide features low light absorption, the transparent oxide may be closer to a modulation waveguide 121. This helps improve modulation efficiency and reduce the size of the chip.

In some possible implementations, a material of the modulation waveguide is silicon, lithium niobate, indium phosphide, or tantalum niobate.

In embodiments of this application, electro-optic modulation efficiency of the lithium niobate, the indium phosphate, the tantalum niobate, or the like is high. This helps improve overall modulation efficiency of the chip and reduce the size of the chip.

In some possible implementations, projection space of the modulation waveguide on the substrate has a hollow region.

In embodiments of this application, the hollow region can reduce light leakage at the modulation waveguide, and ensure strength of an optical signal.

In some possible implementations, the chip further includes:
a transmission waveguide, where the transmission waveguide is connected to at least one of the receiver and the transmitter; and
a dielectric layer, where the dielectric layer surrounds the transmission waveguide, the receiver, and the transmitter.

In embodiments of this application, the transmission waveguide is used as an optical path, and can transmit an optical signal. This helps facilitate optical signal exchange between a plurality of components.

In some possible implementations, the transmission waveguide includes at least one of a first waveguide, a second waveguide, and a third waveguide, a material of the first waveguide is silicon, a material of the second waveguide is silicon nitride, and a material of the third waveguide is lithium niobate, indium phosphate, or tantalum niobate.

In embodiments of this application, a plurality of transmission waveguides may be disposed, and waveguides of different materials are disposed at different locations based on features of the first waveguide, the second waveguide, and the third waveguide, to improve performance of the chip.

In some possible implementations, the chip further includes at least one of a first coupling structure, a second coupling structure, and a third coupling structure.

The first coupling structure includes a first coupling portion of the first waveguide and a second coupling portion of the second waveguide, the second coupling portion is located on a side that is of the first coupling portion and that is away from the substrate, and the first coupling portion and the second coupling portion are configured to implement optical coupling between the first waveguide and the second waveguide.

The second coupling structure includes a third coupling portion of the first waveguide and a fourth coupling portion of the third waveguide, the fourth coupling portion is located on a side that is of the third coupling portion and that is away from the substrate, and the third coupling portion and the fourth coupling portion are configured to implement optical coupling between the first waveguide and the third waveguide.

The third coupling structure includes a fifth coupling portion of the first waveguide, a sixth coupling portion of the second waveguide, and a seventh coupling portion of the third waveguide. The sixth coupling portion is located on a side that is of the fifth coupling portion and that is away from the substrate, the seventh coupling portion is located on a side that is of the sixth coupling portion and that is away from the substrate, and the third coupling structure is configured to implement optical coupling between the second waveguide and the third waveguide.

In embodiments of this application, a plurality of coupling structures can enable signal transmission between different transmission waveguides, so that different technical requirements can be met based on the different waveguides.

In some possible implementations, the photodetector includes a light absorption structure, and a first doped structure and a second doped structure that are respectively located on two sides of the light absorption structure. A material of the light absorption structure is germanium, and doping types of the first doped structure and the second doped structure are opposite.

In embodiments of this application, the photodetector may detect an optical signal, and form an electrical signal based on the detected optical signal. The doping types of the first doped structure and the second doped structure are opposite, and the first doped structure and the second doped structure are configured to separately pass through carriers with different electrical properties, to improve optical-electrical conversion efficiency.

In some possible implementations, the chip further includes:
at least one of a balanced-unbalanced converter and a junction structure that are located on the first side of the substrate. The junction structure includes a third doped structure and a fourth doped structure, and doping types of the third doped structure and the fourth doped structure are opposite.

In embodiments of this application, the at least one of the balanced-unbalanced converter and the junction structure may be further disposed, to further enrich functions integrated into the chip.

In some possible implementations, the transmitter includes at least one of an electro-optic modulator, a laser, and an optical amplifier, and the receiver includes at least one of a photodetector and an optical amplifier.

In embodiments of this application, the transmitter may include the at least one of the electro-optic modulator, the laser (laser diode, LD), and the optical amplifier, and the receiver may include the at least one of the photodetector (photodetector, PD) and the optical amplifier, so that components with different functions are integrated, and the chip can be applied to more scenarios.

A second aspect of embodiments of this application provides an optical/electrical module, including a housing, a circuit board, and the chip connected to the circuit board. The housing is configured to enclose the circuit board and the chip.

In some possible implementations, the optical/electrical module further includes:
at least one of the optical fiber array unit connected to the optical coupling interface in the chip, a trans-impedance amplifier connected to the chip, and a driver module connected to the chip.

A third aspect of embodiments of this application provides a communication device, including:
the optical/electrical module and a processing chip, where the optical/electrical module is connected to the processing chip.

Embodiments of this application provide the chip, the optical/electrical module, and the optical communication device. The chip includes the substrate, and the transmitter and the receiver that are located on the first side of the substrate. The quantity of side walls of the substrate is greater than four, the transmitter is located in the first region of the substrate, the receiver is located in the second region of the substrate, the first region is adjacent to the second region, and the part of the substrate located in the first region has the first side wall on the side that is of the first region and that faces the second region. In other words, the shape of the substrate is not the rectangle. In addition, the part, of the first region, that is located on the side that is of the first side wall and that is away from the second region is the protruding part of the first region relative to the second region, so that the first region and the second region form the abnormal-shaped region. In this way, the first region and the second region may be respectively designed based on the area of the transmitter and the area of the receiver, and do not need to adapt to the regular rectangle of the chip. This reduces the area of the chip to some extent, reduces the area waste of the chip, and reduces the costs of the chip. This also correspondingly reduces the size of the optical/electrical module, and expands the application scenarios of the optical/electrical module.

### BRIEF DESCRIPTION OF DRAWINGS

To clearly understand specific implementations of this application, the following briefly describes accompanying drawings used for describing the specific implementations of this application. It is clear that the accompanying drawings show merely some embodiments of this application.
FIG. 1 is a diagram of a layout of a current chip;
FIG. 2 is a diagram of dicing current chips;
FIG. 3 is a diagram of a structure of a current optical/electrical module;
FIG. 4 is a diagram of a structure of a chip according to an embodiment of this application;
FIG. 5 is a sectional view of the chip in FIG. 4 in an AA direction;
FIG. 6 is a diagram of dicing chips according to an embodiment of this application;
FIG. 7 is a diagram of a structure of another chip according to an embodiment of this application;
FIG. 8 is a diagram of a structure of an optical/electrical module according to an embodiment of this application;
FIG. 9 is a composition diagram of components in a chip according to an embodiment of this application;
FIG. 10 is a diagram of a structure of an electro-optic modulator according to an embodiment of this application;
FIG. 11 is a diagram of a structure of a laser according to an embodiment of this application;
FIG. 12 is a diagram of a structure of a photodetector according to an embodiment of this application;
FIG. 13 is a diagram of a junction structure according to an embodiment of this application;
FIG. 14 is a diagram of a first coupling structure according to an embodiment of this application;
FIG. 15 is a diagram of a second coupling structure according to an embodiment of this application;
FIG. 16 is a diagram of a third coupling structure according to an embodiment of this application;
FIG. 17 is a composition diagram of still another chip according to an embodiment of this application;
FIG. 18 is a diagram of a structure of another optical/electrical module according to an embodiment of this application; and
FIG. 19 is a diagram of a communication device according to an embodiment of this application.

### DESCRIPTION OF EMBODIMENTS

Embodiments of this application provide a chip, an optical/electrical module, and an optical communication device, to reduce an area waste of the chip and reduce costs of the chip.

In this application, terms such as "first", "second", "third", and "fourth" (if exists) in the specification, the claims, and the accompanying drawings are intended to distinguish between similar objects but do not necessarily indicate a specific order or sequence. It should be understood that data used in such a way is interchangeable in proper circumstances, so that embodiments described herein can be implemented in orders other than the order illustrated or described herein. Moreover, the terms "include", "have", and any other variants mean to cover a non-exclusive inclusion, for example, a process, method, system, product, or device that includes a list of steps or units is not necessarily limited to those steps or units, but may include other steps or units not expressly listed or inherent to such a process, method, product, or device.

This application is described in detail with reference to a diagram. For ease of description, a sectional view of a component structure is partially enlarged not based on a general proportion, and the diagram is merely an example, and should not limit the protection scope of this application. In addition, three-dimensional spatial dimensions of length, width, and depth need to be considered in the actual manufacturing.

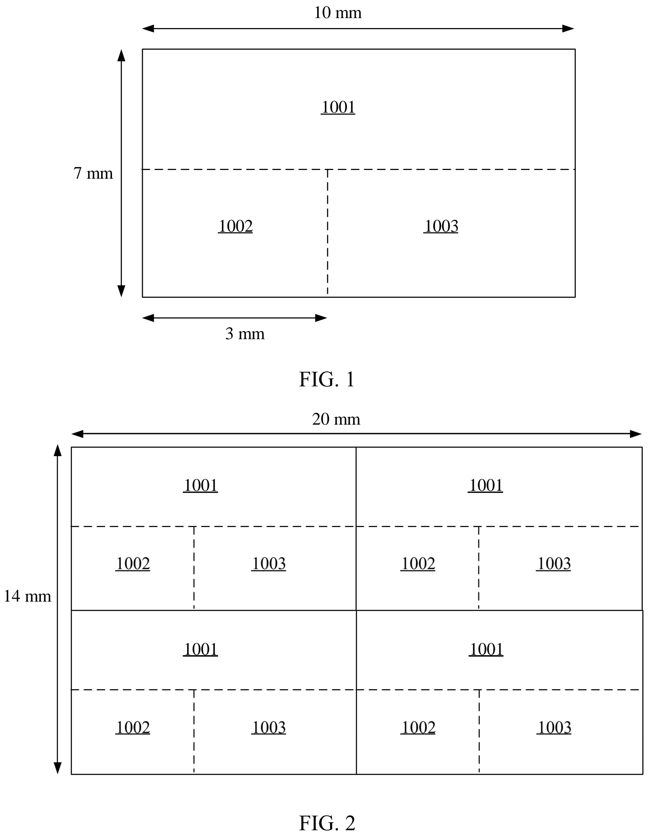

Currently, an optoelectronic chip may include at least one chip, and the chip may have a transmitter and a receiver. A shape of the chip is a rectangle. However, in an actual operation, sizes of the transmitter and the receiver are usually different. FIG. 1 is a diagram of a layout of a current chip. The chip includes a first region 1001, a second region 1002, and a third region 1003. The first region 1001 is used to dispose the transmitter, and the second region 1002 is used to dispose the receiver. For a size of the chip, a longest size of the transmitter and the receiver needs to be used as a final layout width of the chip. As a result, an optional region (that is, the third region 1003) exists on the chip, and this region is not effectively used, causing an area waste of the chip and increasing costs of the chip.

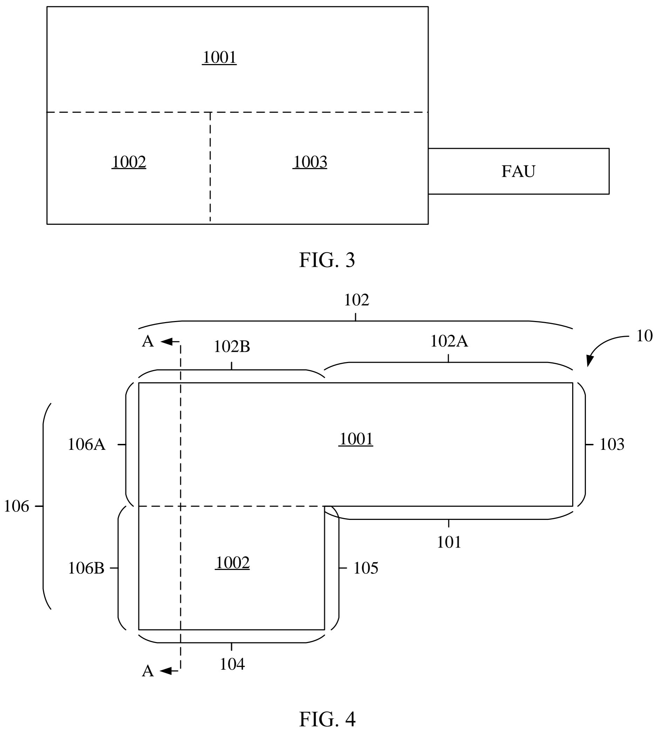

FIG. 2 is a diagram of dicing current chips. A plurality of rectangular chips are obtained through dicing. It can be seen from the figure that an area required by four chips is at least 14 mm*20 mm, and there is an area waste in a large quantity of third regions 1003. FIG. 3 is a diagram of a structure of a current optical/electrical module. The optical/electrical module includes a chip and an optical fiber array unit (fiber array unit, FAU). A size of the optical/electrical module is a sum of a size of the chip and a size of the optical fiber array unit. When the size of the chip is large, the size of the optical/electrical module also needs to be set to a large value. As a result, packaging costs of the optical/electrical module are high, and a large-size package restricts an application scenario of the chip, and is difficult to be applied to a scenario of a small-size module.

Based on the foregoing technical problem, embodiments of this application provide a chip, an optical/electrical module, and an optical communication device. The chip includes a substrate, and a transmitter and a receiver that are located on a first side of the substrate. A quantity of side walls of the substrate is greater than four, the transmitter is located in a first region of the substrate, the receiver is located in a second region of the substrate, the first region is adjacent to the second region, and a part of the substrate located in the first region has a first side wall on a side that is of the first region and that faces the second region. In other words, a shape of the substrate is not a rectangle. In addition, a part, of the first region, that is located on a side that is of the first side wall and that is away from the second region is a protruding part of the first region relative to the second region, so that the first region and the second region form an abnormal-shaped region. In this way, the first region and the second region may be respectively designed based on an area of the transmitter and an area of the receiver, and do not need to adapt to a regular rectangle of the chip. This reduces an area of the chip to some extent, reduces an area waste of the chip, and reduces costs of the chip. This also correspondingly reduces a size of the optical/electrical module, and expands application scenarios of the optical/electrical module.

To make the foregoing objectives, features, and advantages of this application clearer and more comprehensible, the following describes specific implementations of this application in more detail with reference to accompanying drawings.

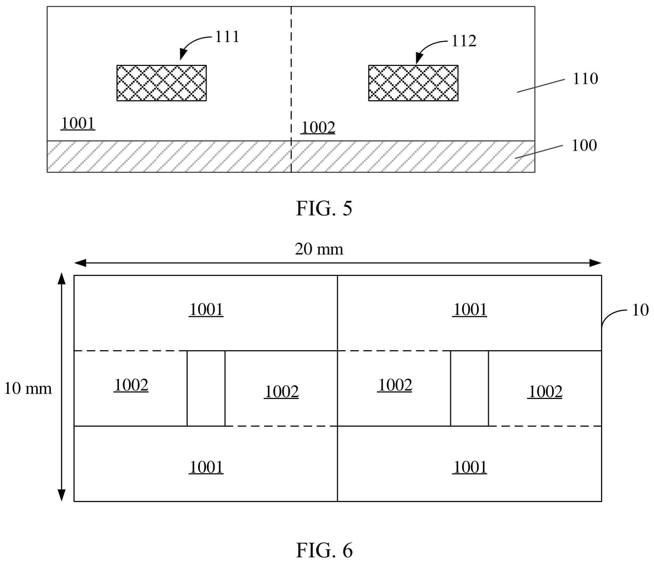

FIG. 4 and FIG. 5 are diagrams of a structure of a chip according to an embodiment of this application. FIG. 5 is a sectional view of the chip in FIG. 4 in an AA direction. The chip 10 includes a substrate 100, and a transmitter 111 and a receiver 112 that are located on a first side of the substrate 100. The transmitter 111 is located in a first region 1001 of the substrate 100, the receiver 112 is located in a second region 1002 of the substrate 100, and the first region 1001 is adjacent to the second region 1002.

In this embodiment of this application, the substrate 100 is configured to support a device on the substrate. The substrate 100 may be a semiconductor substrate, for example, may be a Si substrate, a Ge substrate, a SiGe substrate, a silicon-on-insulator (silicon-on-insulator, SOI) substrate, a germanium-on-insulator (germanium-on-insulator, GOI) substrate, or a silicon-germanium-on-insulator (silicon-germanium-on-insulator, SGOI) substrate. In another embodiment, the semiconductor substrate may alternatively be a substrate, for example, a GaAs substrate, an InP substrate, or a SiC substrate, of another element semiconductor or a compound semiconductor. In this embodiment of this application, a material of the substrate 100 may be silicon.

For ease of description, in this embodiment of this application, a side, of the chip 10, on which the transmitter 111 and the receiver 112 are disposed may be defined as the first side, and the first side may be used as "above". To be specific, a direction from the substrate 100 to the transmitter 111 and the receiver 112 is referred to as a "top direction", and a direction from the transmitter 111 and the receiver 112 to the substrate 100 is referred to as a "bottom direction". Actually, such marking is for convenience and is irrelevant to a direction of gravity. When definition is made based on the direction of gravity, a location relationship between the substrate 100, the transmitter 111, and the receiver 112 is determined based on a placement condition of the chip including the substrate 100, the transmitter 111, and the receiver 112.

In this embodiment of this application, the chip may be an integrated coherent transmitter receiver (Integrated coherent transmitter receiver, ICTR) chip. As a photonic chip (photonic integrated circuit, PIC), the integrated coherent transmitter receiver chip may have an optical medium for transmitting an optical signal. When the material of the substrate 100 is the silicon, the photonic chip may be represented as Si-PIC. The transmitter 111 is configured to convert an electrical signal into an optical signal, and the receiver 112 is configured to convert an optical signal into an electrical signal, to implement conversion between the optical signal and the electrical signal via the transmitter 111 and the receiver 112. The transmitter 111 may be an integrated coherent transmitter (Integrated coherent transceiver, ICT), and the receiver 112 may be an integrated coherent receiver (Integrated coherent receiver, ICR).

Sizes of the transmitter 111 and the receiver 112 are usually different. For a size of the chip, a longest size of the transmitter 111 and the receiver 112 needs to be used as a final layout width of the chip. As a result, an additional region exists on the chip, and this region is not effectively used, causing an area waste of the chip and increasing costs of the chip. For example, when the transmitter 111 includes an electro-optic modulator, a modulation voltage Vpi applied by a supported electrical chip to the electro-optic modulator is about 2 V to 3 V due to a length of the modulator, and the corresponding length of the modulator is about 8 mm to 10 mm. However, a length of the transmitter 111 is actually only about 3 mm. Refer to FIG. 1. There is a large area waste of the chip.

In view of this, in this embodiment of this application, a quantity of side walls of the substrate 100 may be set to be greater than four, and a part of the substrate 100 located in the first region 1001 has a first side wall 101 on a side that is of the first region 1001 and that faces the second region 1002. In other words, a shape of the substrate 100 is not a rectangle. In addition, a part, of the first region 1001, that is located on a side that is of the first side wall 101 and that is away from the second region 1002 is a protruding part of the first region 1001 relative to the second region 1002, so that the first region 1001 and the second region 1002 form an abnormal-shaped region. In this way, the first region 1001 and the second region 1002 may be respectively designed based on an area of the transmitter 111 and an area of the receiver 112, and do not need to adapt to a regular rectangle of the chip 10, so that a layout of the first region 1001 and the second region 1002 is more reasonable. This reduces an area of the chip 10 to some extent, reduces an area waste of the chip 10, and reduces costs of the chip 10. This also correspondingly reduces a size of an optical/electrical module, and expands application scenarios of the optical/electrical module. The shape of the substrate 100 may be obtained through laser stealth dicing, and the substrate 100 may be any shape that meets the foregoing condition, to maximize utilization of the area of the chip 10 and reduce the costs of the chip 10.

It should be noted that the first region 1001 and the second region 1002 are defined for ease of describing the shape of the substrate 100. A boundary line (a horizontal dashed line in FIG. 5) between the first region 1001 and the second region 1002 is also added for ease of description. Actually, no boundary line is disposed between the first region 1001 and the second region 1002 on a surface and the inside of the chip 10. As a region for placing the transmitter 111, the first region 1001 may be a projection region of the transmitter 111 toward the substrate 100, or may be a regular or irregular region including the projection region. Similarly, as a region for placing the receiver 112, the second region 1002 may be a projection region of the receiver 112 toward the substrate 100, or may be a regular or irregular region including the projection region. The virtual boundary between the first region 1001 and the second region 1002 may be a straight line or a curve.

Specifically, a surface of the substrate 100 may be presented as an L shape. Refer to FIG. 4. The substrate 100 has a second side wall 102 on a side that is of the first region 1001 and that is away from the second region 1002, the first side wall 101 is disposed opposite to a first part 102A of the second side wall 102, and the substrate 100 has a third side wall 103 located between the first side wall 101 and the second side wall 102 in the first region 1001. In addition, the substrate 100 has a fourth side wall 104 on a side that is of the second region 1002 and that is away from the first region 1001, the fourth side wall 104 is disposed opposite to a second part 102B of the second side wall 102, and the substrate 100 has a fifth side wall 105 located between the fourth side wall 104 and the first side wall 101 in the second region 1002. The substrate 100 has a sixth side wall 106, a first part 106A of the sixth side wall 106 is disposed opposite to the third side wall 103, and a second part 106B of the sixth side wall 106 is disposed opposite to the fifth side wall 105. In an actual operation, the first side wall 101, the third side wall 103, the second side wall 102, the sixth side wall 106, the fourth side wall 104, and the fifth side wall 105 sequentially surround and are adjacent to each other, to form the L-shaped substrate 100.

In comparison with a rectangular substrate 100, the L-shaped substrate 100 reduces the area of the chip 10, and reduces the area waste of the chip 10. More chips 10 can be manufactured based on wafers with same areas, and a same quantity of chips 10 require a smaller wafer area, thereby reducing costs for manufacturing the chips 10. The L shape is used as an example, and the costs of the chip 10 may be reduced by about 50% to 60%. During specific implementation, in a plane parallel to the surface of the substrate 100, a length of the second side wall 102 is determined based on the length of the transmitter 111, a length of the third side wall 103 is determined based on a width of the transmitter 111, a length of the fourth side wall 104 is determined based on a length of the receiver 112, and a length of the fifth side wall 105 is determined based on a width of the receiver 112. When a difference between the length of the transmitter 111 and the length of the receiver 112 is large, in the plane parallel to the surface of the substrate 100, a size of the first side wall 101 may be set to be greater than or equal to half of a size of the second side wall 102. To be specific, a size of the fourth side wall 104 is less than or equal to half of the size of the second side wall 102, and two chips 10 in a same wafer may be properly arranged and integrated into one rectangle, so that the more chips 10 can be manufactured based on the wafers with the same areas.

FIG. 6 is a diagram of dicing chips according to an embodiment of this application. Two chips 10 are interconnected into one rectangle. In this way, an area required by four chips 10 is at least 10 mm*20 mm. In comparison with the area required by the four chips in FIG. 2 being at least 14 mm*20 mm, a same quantity of chips require a smaller area.

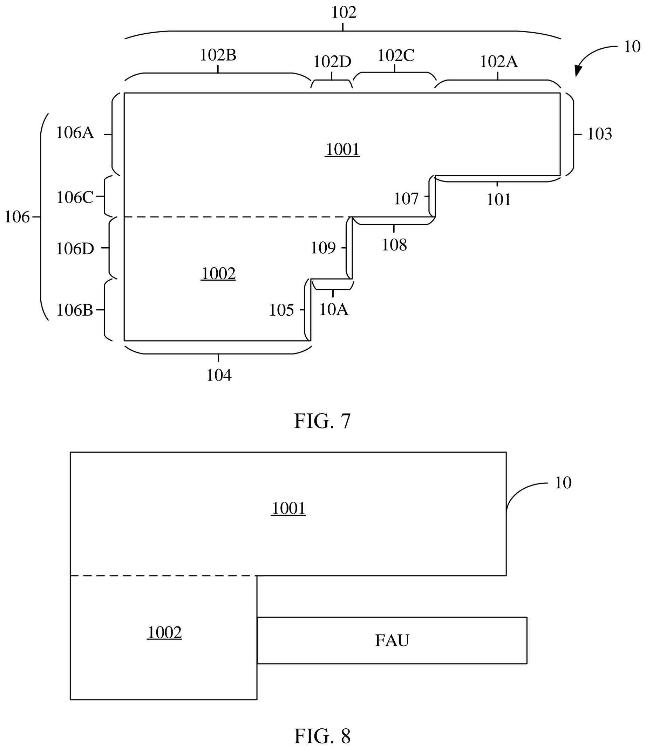

Specifically, the surface of the substrate 100 may be presented as an irregular shape, and a plurality of side walls form a stepped shape. FIG. 7 is a diagram of a structure of another chip according to an embodiment of this application. In the first region 1001, the substrate 100 may further include a seventh side wall 107 and an eighth side wall 108 that are connected between the fifth side wall 105 and the first side wall 101. The seventh side wall 107 directly faces a third part 106C of the sixth side wall 106, and the eighth side wall 108 directly faces a third part 102C of the second side wall 102, so that the substrate 100 is more diversified in shape. In this embodiment of this application, in the second region 1002, the substrate 100 further includes a ninth side wall 109 and a tenth side wall 10A that are connected between the fifth side wall 105 and the first side wall 101. The ninth side wall directly faces a fourth part 106D of the sixth side wall 106, and the tenth side wall directly faces a fourth part 102D of the second side wall 102. In an actual operation, based on the foregoing six side walls, only the seventh side wall 107 and the eighth side wall 108 may be added, or only the ninth side wall 109 and the tenth side wall 10A may be added, or the seventh side wall 107, the eighth side wall 108, the ninth side wall 109, and the tenth side wall 10A may be added at the same time. In this case, the third side wall 103, the first side wall 101, the seventh side wall 107, the eighth side wall 108, the ninth side wall 109, the tenth side wall 10A, and the fifth side wall 105 are sequentially adjacent to each other.

In this embodiment of this application, the chip 10 further has an optical coupling interface that allows receiving an optical signal from an optical fiber and transmitting an optical signal to an optical fiber. The optical coupling interface has a waveguide configured to couple to the optical fiber to transmit the optical signal. In a multi-channel optical/electrical module, the chip 10 may have a plurality of waveguides, and the plurality of waveguides form a waveguide array. The optical coupling interface is configured to connect to an optical fiber array unit. The optical fiber array unit is configured to fasten an optical fiber array (fiber array, FA). The optical fiber array is coupled to the waveguide array, so that the chip 10 can receive the optical signal from the optical fiber array or transmit the optical signal to the optical fiber array. A plurality of optical fibers in the optical fiber array may be single-mode optical fibers or other optical fibers. The optical fiber array may be fastened, to have a determined relative location, and a component configured to fasten the optical fiber array and align the optical fiber array to the chip 10 is referred to as the optical fiber array unit. A coupling manner of the optical fiber array and the waveguide array may be using an edge coupler (edge coupler, EC). The optical fiber array is coupled to an edge of the chip 10. The edge coupler has a small loss, and is widely concerned.

Specifically, the optical coupling interface may be disposed on at least one of the first side wall 101 and the fifth side wall 105. In this special interface design, a size of the optical/electrical module is a larger value of the following two values: a size of the first side wall 101 in the plane parallel to the surface of the substrate 100, and a sum of a size of the fourth side wall 104 in the plane parallel to the surface of the substrate 100 and a size of the optical fiber array. In this way, in comparison with the size of the optical/electrical module being a sum of a size of the chip 10 and the size of the optical fiber array, a size of an optical fiber module is reduced. In addition, projection space of the optical coupling interface on the substrate 100 has a hollow region. In this way, the hollow region can reduce light leakage at the optical coupling interface, and ensure strength of an optical signal.

FIG. 8 is a diagram of a structure of an optical/electrical module according to an embodiment of this application. An optical coupling interface is disposed on the fifth side wall 105, an optical fiber array unit is disposed in a region between the first side wall 101 and the fifth side wall 105, and a sum of a size of the fourth side wall 104 in a plane parallel to a surface of the substrate 100 and a size of the optical fiber array is slightly greater than a size of the first side wall 101 in the plane parallel to the surface of the substrate 100. In comparison with the design in FIG. 3, an overall size of the optical/electrical module is reduced. In an actual operation, when the optical coupling interface is disposed on the fifth side wall 105, the size of the optical/electrical module may be reduced by about 25%. Application scenarios of the chip 10 are expanded.

In this embodiment of this application, the transmitter 111 may include at least one of an electro-optic modulator, a laser (laser diode, LD), and an optical amplifier, and the receiver 112 may include at least one of a photodetector (photodetector, PD) and an optical amplifier. Quantities of electro-optic modulators, lasers, optical amplifiers, and photodetectors may be set based on an actual case, so that components with different functions are integrated, and the chip 10 can be applied to more scenarios. The transmitter 111 and the receiver 112 may be disposed at a dielectric layer 110. The dielectric layer 110 isolates the transmitter 111 and the receiver 112, and protects the transmitter 111 and the receiver 112. A material of the dielectric layer 110 may be, for example, silicon oxide. The optical amplifier may be a semiconductor optical amplifier (Semiconductor Optical Amplifier, SOA). The chip 10 including the high-speed electro-optic modulator and the high-speed photodetector is widely used in a large-capacity and long-distance coherent communication system as a core interface for conversion from an electrical domain to an optical domain and from an optical domain to an electrical domain in an optical network. A form of the chip 10 directly affects a rate, a size, costs, power consumption, and the like of the optical/electrical module. When the size of the chip 10 is large, the optical/electrical module usually has a low rate, a large size, high costs, and high power consumption.

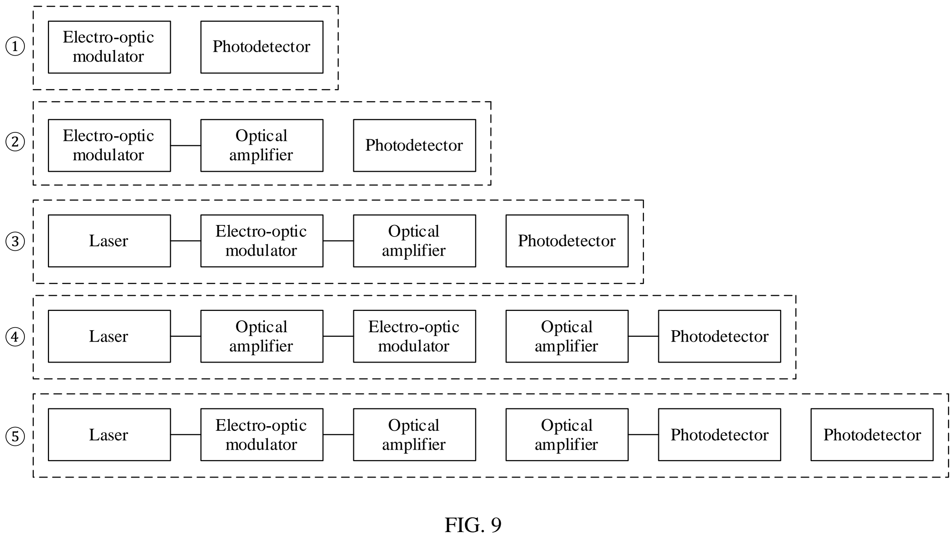

The chip 10 may include a plurality of building block (building block, BB) units. Types and quantities of lasers, electro-optic modulators, SOAs, and PDs, and various organizational forms are not limited in embodiments of this application. FIG. 9 is a composition diagram of components in the chip 10 according to an embodiment of this application. In a first example ①, the chip 10 includes an electro-optic modulator and a photodetector. In a second example ②, the chip 10 includes an electro-optic modulator, an optical amplifier, and a photodetector, where the electro-optic modulator is connected to the optical amplifier. In a third example ③, the chip 10 includes a laser, an electro-optic modulator, and an optical amplifier that are sequentially connected, and further includes a photodetector. In a fourth example ④, the chip 10 includes a laser, an optical amplifier, and an electro-optic modulator that are sequentially connected, and further includes an optical amplifier and a photodetector that are sequentially connected. In a fifth example ⑤, the chip 10 includes a laser, an electro-optic modulator, and an optical amplifier that are sequentially connected, further includes an optical amplifier and a photodetector that are sequentially connected, and further includes an additional photodetector.

The electro-optic modulator may include a modulation waveguide 121 and a modulation electrode pair 122 on two sides of the modulation waveguide 121. The modulation electrode pair 122 provides a modulation electric field when a voltage is applied to the modulation electrode pair 122. The modulation electric field may affect an optical feature of the modulation waveguide 121, to modulate an optical signal of the modulation waveguide 121. A material of the modulation waveguide 121 may be silicon, lithium niobate (lithium niobate, LN), indium phosphide (indium phosphide, InP), tantalum niobate, or the like. Modulation waveguides 121 of different materials may enable the electro-optic modulator to have different electro-optic modulation efficiency. For example, electro-optic modulation efficiency of the lithium niobate, the indium phosphide, or the tantalum niobate is higher than electro-optic modulation efficiency of the silicon. This helps improve overall modulation efficiency of the chip 10 and reduce a size of the chip 10. When the modulation waveguide 121 is made of a lithium niobate material, the electro-optic modulator may be referred to as a thin film lithium niobate (thin film lithium niobate, TFLN) modulator. The thin film lithium niobate modulator features high bandwidth and a small size, operates without cooling, and may be applied to a scenario like coherent communication at baud rates of 130 GBaud or higher.

The modulation electrode pair 122 may be led out to a surface of the dielectric layer 110 via inter-layer interconnection structures 123, and the inter-layer interconnection structure 123 may include a conductive pillar, or may include a conductive pillar and a conductive pad. There may be a plurality of conductive pillars and a plurality of conductive pads. The conductive pillars may be disposed between conductive pads at adjacent layers. The conductive pillars are disposed in through holes that extend longitudinally at the dielectric layer 110. The plurality of conductive pads may longitudinally separate the through holes that penetrate the dielectric layer 110 into a plurality of through holes, thereby reducing depths of the through holes, reducing depth-width ratios of the through holes, reducing etching difficulty, and improving reliability of the inter-layer interconnection structure 123. In addition, projection space of the modulation waveguide 121 on the substrate 100 has a hollow region. In this way, the hollow region can reduce light leakage at the modulation waveguide 121, and ensure strength of an optical signal.

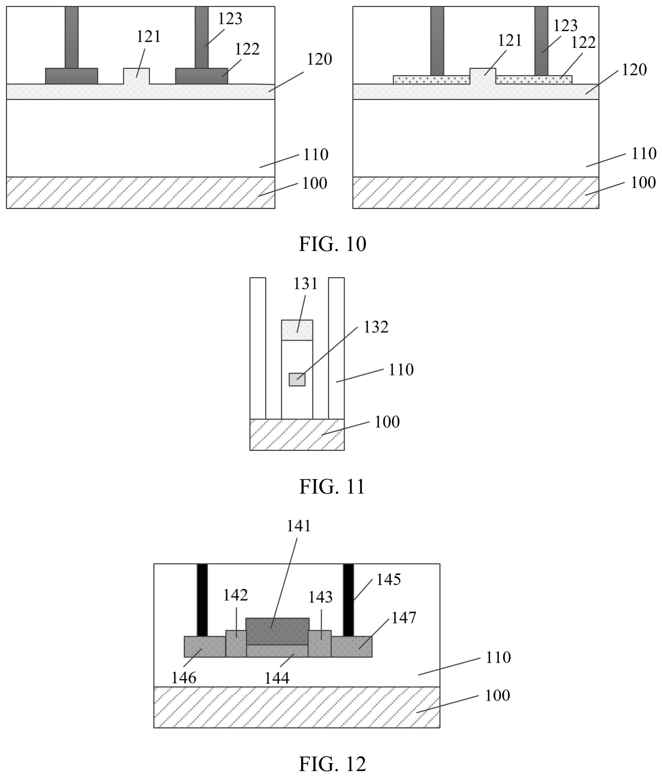

FIG. 10 is a diagram of a structure of an electro-optic modulator according to an embodiment of this application. A material of the modulation waveguide 121 is lithium niobate, and is a protruding fin structure on a lithium niobate film layer 120. The modulation electrode pair 122 is located on the lithium niobate film layer 120, and is separately located on two sides of the modulation waveguide 121. The dielectric layer 110 is disposed above the modulation waveguide 121 and the modulation electrode pair 122, and the modulation electrode pair 122 is led out to a surface of the dielectric layer 110 via inter-layer interconnection structures. In FIG. 10A, a material of the modulation electrode pair 122 is metal, for example, may be gold. In FIG. 10B, a material of the modulation electrode pair 122 is transparent oxide (Transparent conducting oxide, TCO), for example, ITO or IGZO. The transparent oxide features a low light loss and a high conductivity, and therefore, light utilization can be improved. In addition, because the transparent oxide features low light absorption, the transparent oxide may be closer to the modulation waveguide 121. This helps improve modulation efficiency and reduce a size of the chip 10.

The laser is configured to generate an optical carrier. In this way, based on the electro-optic modulator, an electrical signal on the modulation electrode pair 122 may be modulated to the optical carrier in the modulation waveguide 121, to form an optical signal. FIG. 11 is a diagram of a structure of a laser according to an embodiment of this application. The laser includes a light emitting structure 131, and a material of the light emitting structure 131 includes a group III-V compound like gallium nitride and indium phosphide. The laser further includes the waveguide (waveguide, WG) 132. The waveguide 132 is configured to propagate an optical carrier generated by the laser to the outside of the laser. A material of the waveguide 132 may be silicon nitride (SiN). The laser may be disposed at the dielectric layer 110, and has a specific distance from the dielectric layer 110, to reduce light absorption of the dielectric layer 110.

A photodetector may detect an optical signal, and form an electrical signal based on the detected optical signal. FIG. 12 is a diagram of a structure of a photodetector according to an embodiment of this application. The photodetector includes a light absorption structure 141. The light absorption structure 141 may generate a carrier under light irradiation, and a material of the light absorption structure 141 may include germanium and the like. The photodetector may further include a first doped structure 142 and a second doped structure 143 that are respectively located on two sides of the light absorption structure 141. Doping types of the first doped structure 142 and the second doped structure 143 are opposite, and the first doped structure 142 and the second doped structure 143 are configured to separately pass through carriers with different electrical properties, to improve optical-electrical conversion efficiency.

The photodetector 14 may be led out to a surface of the dielectric layer 110 via an inter-layer interconnection structure 145, to lead the generated electrical signal to the outside of the dielectric layer 110. The inter-layer interconnection structure 145 may include a conductive pillar, or may include a conductive pillar and a conductive pad. There may be a plurality of conductive pillars and a plurality of conductive pads. The conductive pillars may be disposed between conductive pads at adjacent layers. The conductive pillars are disposed in through holes that extend longitudinally at the dielectric layer 110. The plurality of conductive pads may longitudinally separate the through holes that penetrate the dielectric layer 110 into a plurality of through holes, thereby reducing depths of the through holes, reducing depth-width ratios of the through holes, reducing etching difficulty, and improving reliability of the inter-layer interconnection structure 145.

Specifically, the first doped structure 142 and the second doped structure 143 may be respectively connected to different inter-layer interconnection structures 145. In addition, a fifth doped structure 146 may be further disposed between the first doped structure 142 and the inter-layer interconnection structure 145. The fifth doped structure 146 has a same doping type as the first doped structure 142, and has doping concentration higher than that of the first doped structure 142. A sixth doped structure 147 may be further disposed between the second doped structure 143 and the inter-layer interconnection structure. The sixth doped structure 147 has a same doping type as the second doped structure 143, and has doping concentration higher than that of the second doped structure 143. An intrinsic layer 144 may be further disposed between the first doped structure 142 and the second doped structure 143. One side of the intrinsic layer 144 is in contact with the first doped structure 142, and the other side is in contact with the second doped structure 143, so that the first doped structure 142, the intrinsic layer 144, and the second doped structure 143 form a p-i-n structure. The intrinsic layer 144 and the light absorption structure 141 are stacked, one side of the light absorption structure 141 is in contact with the first doped structure 142, and the other side is in contact with the second doped structure 143, so that the intrinsic layer 144 and the light absorption structure 141 are both located between the first doped structure 142 and the second doped structure 143. The first doped structure 142, the second doped structure 143, the fifth doped structure 146, the sixth doped structure 147, and the intrinsic layer 144 may have same intrinsic materials, for example, all of which are silicon. The first doped structure 142 and the fifth doped structure 146 may have same doping elements. The second doped structure 143 and the sixth doped structure 147 may have same doping elements. The fifth doped structure 146 and the sixth doped structure 147 each are in good contact with the photodetector, and are in good contact with inter-layer interconnection structures 145, thereby reducing a contact loss of an electrical signal.

In the field of semiconductor devices, a doping element may be doped into a semiconductor, and types of the doping element may be classified into a P-type (hole concentration, positive) and an N-type (electron concentration, negative). The type of the doping element may also be referred to as a doping type. For example, a P-type doping element may be doped into the semiconductor to obtain a P-type semiconductor, so that the P-type semiconductor mainly performs hole conduction. Alternatively, an N-type doping element is doped into the semiconductor to obtain an N-type semiconductor, so that the N-type semiconductor mainly performs electron conduction. A material of a doped semiconductor is used as an intrinsic material. Concentration of doping elements in the doped semiconductor is used as doping concentration, and may be represented based on a ratio of the doping elements to a semiconductor element, or may be represented based on a quantity of atoms of the doping element per unit volume. The P-type doping element may be a group III element, for example, boron and indium, and the N-type element may be a group V element, for example, nitrogen and phosphorus.

Doping on the semiconductor may be classified into light doping and heavy doping based on the concentration of the doping elements in the doped semiconductor, and correspondingly, the doped semiconductor is a light doped semiconductor or a heavy doped semiconductor. Light doping may be performed on the first doped structure 142 and the second doped structure 143, and heavy doping may be performed on the fifth doped structure 146 and the sixth doped structure 147.

The light doping means that a small quantity of doping elements are doped, and concentration of the doping elements in the doped semiconductor is low. For example, a ratio of an atom quantity of the doping elements to an atom quantity of the semiconductor element is about one part per billion. For example, performing light doping on the semiconductor based on P-type doping elements may be represented as low hole concentration (P-type) doping, to obtain a P-type semiconductor; and performing light doping on the semiconductor based on N-type doping elements may be represented as low electron concentration (N-type) doping, to obtain an N-type semiconductor. The heavy doping means that a large quantity of doping elements are doped, and concentration of the doping elements in the doped semiconductor is high. For example, a ratio of an atom quantity of the doping elements to an atom quantity of the semiconductor element is about one part per thousand. For example, performing heavy doping on the semiconductor based on P-type doping elements may be represented as high hole concentration (P+type) doping, to obtain a P+type semiconductor; and performing heavy doping on the semiconductor based on N-type doping elements may be represented as high electron concentration (N+type) doping, to obtain an N+type semiconductor.

An optical amplifier is configured to amplify an optical signal. An optical amplifier in the transmitter 111 may amplify an optical carrier generated by the laser, or amplify a modulated optical signal. An optical amplifier in the receiver 112 may amplify a received optical signal, and the amplified optical signal is detected by the photodetector. A material of the optical amplifier includes the group III-V compound, for example, the gallium nitride.

In this embodiment of this application, the chip 10 may further include at least one of a balanced-unbalanced converter and a junction structure that are located on a first side of the substrate 100. The balanced-unbalanced converter is also referred to as a balun structure, and includes at least one input end and at least one output end. A quantity of input ends is different from a quantity of output ends, to implement conversion of an electrical signal.

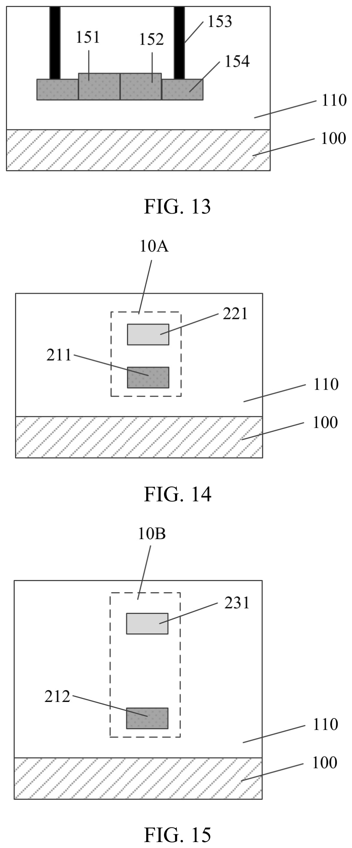

FIG. 13 is a diagram of a junction structure according to an embodiment of this application. The junction structure includes a third doped structure 151 and a fourth doped structure 152. Doping types of the third doped structure 151 and the fourth doped structure 152 are opposite. The third doped structure 151 and the fourth doped structure 152 form a PN junction, and the junction structure may be used as a modulator, an optical amplifier, a switch, or the like. The junction structure may be led out to a surface of the dielectric layer 110 via an inter-layer interconnection layer 153, and a doped structure 154 may be disposed between the junction structure and the inter-layer interconnection layer 153.

The chip 10 may further include a polarization splitter-rotator (polarization splitter-rotator, PSR) located on a first side of the substrate 100. The polarization splitter-rotator includes an input end, a first output end for a TM channel, and a second output end for a TE channel. An input light beam input to the input end includes N channel optical signals having two orthogonal polarizations such as a TE polarization and a TM polarization. The input light beam may be separated based on the polarizations, so that the optical signals are divided into light in different polarization states. The polarization splitter-rotator further includes a rotator, configured to rotate a polarization state of light. The polarization splitter-rotator may be enclosed by the dielectric layer 110, and a refractive index of the polarization splitter-rotator is greater than a refractive index of the dielectric layer 110, and a material of the polarization splitter-rotator may be SiN.

In this embodiment of this application, the chip 10 further includes a transmission waveguide located on the first side of the substrate 100. The transmission waveguide is connected to at least one of the receiver 112 and the transmitter 111. The dielectric layer 110 encloses the transmission waveguide, the receiver 112, and the transmitter 111. The refractive index of the dielectric layer 110 is less than a refractive index of the transmission waveguide. As an optical path, the transmission waveguide is used as an optical path, and can transmit an optical signal. This helps facilitate optical signal exchange between a plurality of components. For example, the transmission waveguide transmits an optical signal to the receiver 112, or may transmit an optical signal sent by the transmitter 111. Therefore, the transmission waveguide may be disposed in the second region 1002 in which the receiver 112 is located, or may be disposed in the first region 1001 in which the transmitter 111 is located.

The transmission waveguide may have a single material, or may have a plurality of materials. The transmission waveguide includes at least one of a first waveguide, a second waveguide, and a third waveguide, a material of the first waveguide is silicon, a material of the second waveguide is silicon nitride, and a material of the third waveguide is lithium niobate, indium phosphate, or tantalum niobate. The first waveguide and the third waveguide have electro-optic effect, and the electro-optic effect may be consistent with that of the modulation waveguide 121 in an electro-optic modulator. When materials of the modulation waveguide 121 and the first waveguide are consistent, the modulation waveguide 121 and the first waveguide may be disposed at a same layer. When materials of the modulation waveguide 121 and the second waveguide are consistent, the modulation waveguide 121 and the second waveguide may be disposed at a same layer.

In addition, a waveguide in a laser and a transmission waveguide of a material consistent with that of the waveguide in the laser are located at a same layer. For example, if a material of the waveguide 132 in the laser is silicon nitride, the waveguide 132 in the laser and the second waveguide are located at a same layer. When a material of a doped structure (that is, at least one of the first doped structure 142, the second doped structure 143, the fifth doped structure 146, and the sixth doped structure 147) in the photodetector is the silicon, the waveguide in the laser and the first waveguide may be located at a same layer. When a material of a doped structure (at least one of the third doped structure 151 and the fourth doped structure 152) in the junction structure is the silicon, the waveguide in the laser and the first waveguide 21 may be located at a same layer. In this way, different structures of a same material are disposed at a same layer, and a same process may be used to form these structures, thereby simplifying a manufacturing process and reducing manufacturing costs.

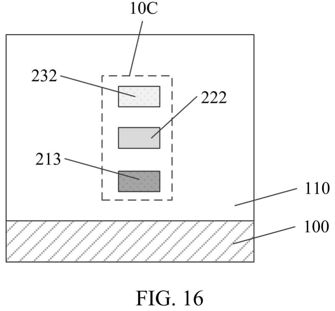

In this embodiment of this application, the chip 10 further includes at least one of a first coupling structure 10A, a second coupling structure 10B, and a third coupling structure 10C. FIG. 14 is a diagram of a first coupling structure according to an embodiment of this application. FIG. 15 is a diagram of a second coupling structure according to an embodiment of this application. FIG. 16 is a diagram of a third coupling structure according to an embodiment of this application. A plurality of coupling structures can enable signal transmission between different transmission waveguides, so that different technical requirements can be met based on the different waveguides. When a first waveguide and a second waveguide exist in the chip 10, optical coupling between the first waveguide and the second waveguide may be implemented via the first coupling structure 10A. A transmission loss of the second waveguide is less than a transmission loss of the first waveguide 21. Therefore, transmission waveguides of different materials may be arranged at different locations based on features of the first waveguide and the second waveguide, thereby improving performance of the chip 10. When the second waveguide and a third waveguide exist in the chip 10, optical coupling between the first waveguide and the third waveguide may be implemented via the second coupling structure 10B. The second waveguide has a small transmission loss and low manufacturing costs, and the third waveguide has an electro-optic modulation feature. Transmission waveguides of different materials may be arranged at different locations based on features of the second waveguide and the third waveguide, thereby improving the performance of the chip 10. When the first waveguide, the second waveguide, and the third waveguide exist in the chip 10, optical coupling between the second waveguide and the third waveguide may be implemented via the third coupling structure 10C. The first waveguide has low manufacturing costs, the second waveguide has the small transmission loss, and the third waveguide has high electro-optic modulation efficiency. Therefore, transmission waveguides of different materials may be disposed at different locations based on features of different materials, thereby improving the performance of the chip 10. The foregoing optical coupling may be evanescent coupling (evanescent coupling, EVC).

The first coupling structure 10A includes a first coupling portion 211 of the first waveguide and a second coupling portion 221 of the second waveguide. The second coupling portion 221 is located on a side that is of the first coupling portion 211 and that is away from the substrate 100. For example, when the first waveguide and the second waveguide are located above the substrate 100, the second coupling portion 221 is located above the first coupling portion 211. The second coupling structure 10B includes a third coupling portion 212 of the first waveguide and a fourth coupling portion 231 of the third waveguide. The fourth coupling portion 231 is located on a side that is of the third coupling portion 212 and that is away from the substrate 100. For example, when the first waveguide and the third waveguide are located above the substrate 100, the fourth coupling portion 231 is located above the third coupling portion 212. The third coupling structure 10C includes a fifth coupling portion 213 of the first waveguide, a sixth coupling portion 222 of the second waveguide, and a seventh coupling portion 232 of the third waveguide. The sixth coupling portion 222 is located on a side that is of the fifth coupling portion 213 and that is away from the substrate 100, and the seventh coupling portion 232 is located on a side that is of the sixth coupling portion 222 and that is away from the substrate 100. For example, when the first waveguide, the second waveguide, and the third waveguide are located above the substrate 100, the sixth coupling portion 222 is located above the fifth coupling portion 213, and the seventh coupling portion 232 is located above the sixth coupling portion 222.

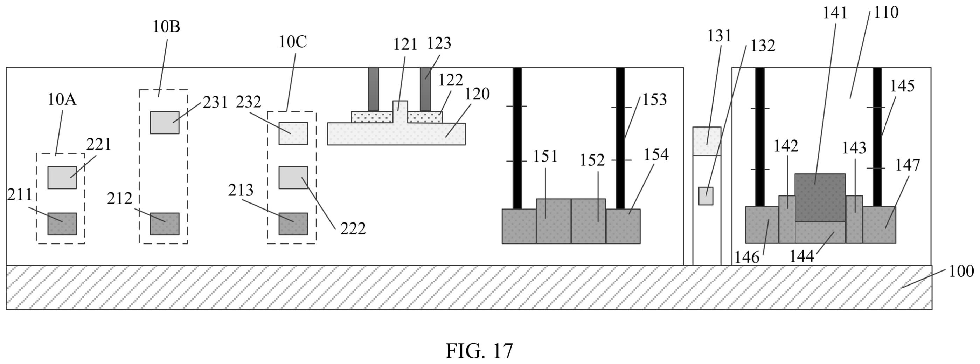

FIG. 17 is a composition diagram of still another chip according to an embodiment of this application. The chip includes the first coupling structure 10A, the second coupling structure 10B, and the third coupling structure 10C, and further includes an electro-optic modulator, a junction structure, a laser, and a photodetector detector. These components are described in the foregoing figures. Details are not described herein again.

In this embodiment of this application, the transmitter 111 and the receiver 112 may be disposed on the single chip 10, including a combination of a plurality of components and a combination of a plurality of transmission waveguides, so that the single chip 10 can implement hybrid integration of more functions. The high-rate, high-integration, and low-cost optical chip 10 with better performance and integrated with a transmitter and a receiver can be implemented. The chip 10 integrated with a plurality of transmitters and a plurality of receivers features high bandwidth, small-size non-hermetic encapsulation, and high integration, and operates without cooling. In comparison with a conventional optical chip 10, the chip 10 significantly improves modulator bandwidth and impedance, integrates a high-performance passive structure, and reduces a size, costs, and power consumption of a transmit end of an optical module, thereby providing an important solution for evolution of a future optical module. The chip 10 may be applied to a line-side solution of a coherent ICTR optical chip 10 like a 400 Gbps+ module (140 Gbps generation) or an 800 Gbps+ module (200 Gbps/240 Gbps generation), and may also be applied to a client-side solution of an 800 Gbps+ module.

Embodiments of this application provide the chip. The chip includes the substrate, and the transmitter and the receiver that are located on the first side of the substrate. The quantity of side walls of the substrate is greater than four, the transmitter is located in the first region of the substrate, the receiver is located in the second region of the substrate, the first region is adjacent to the second region, and the part of the substrate located in the first region has the first side wall on the side that is of the first region and that faces the second region. In other words, the shape of the substrate is not the rectangle. In addition, the part, of the first region, that is located on the side that is of the first side wall and that is away from the second region is the protruding part of the first region relative to the second region, so that the first region and the second region form the abnormal-shaped region. In this way, the first region and the second region may be respectively designed based on the area of the transmitter and the area of the receiver, and do not need to adapt to the regular rectangle of the chip. This reduces the area of the chip to some extent, reduces the area waste of the chip, and reduces the costs of the chip. This also correspondingly reduces the size of the optical/electrical module, and expands the application scenarios of the optical/electrical module.

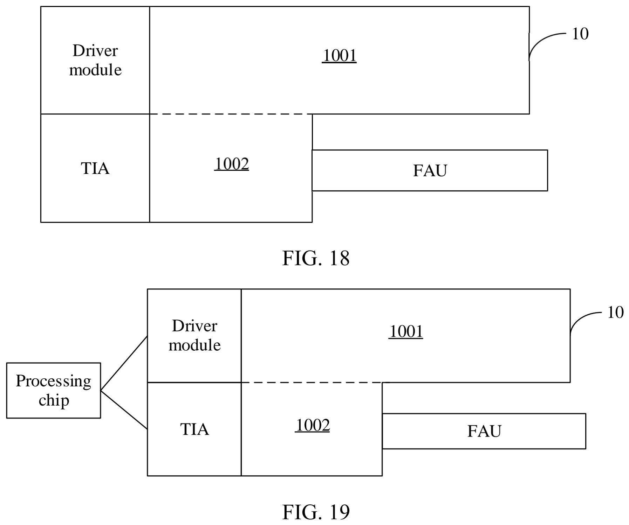

Based on the chip provided in the foregoing embodiments, an embodiment of this application provides an optical/electrical module. FIG. 18 is a diagram of a structure of an optical/electrical module according to an embodiment of this application. The optical/electrical module includes a housing, a circuit board, and the chip 10 connected to the circuit board. The housing is configured to enclose the circuit board and the chip 10. The optical/electrical module may be a pluggable module (faceplate-pluggable module), a co-packaged-optics module (co-packaged-optics module), or the like. The co-packaged-optics module is a non-pluggable module. The optical/electrical module and a switch chip form an optical switch. The optical switch can be used for data exchange between servers at different layers in a large-scale data center, and can improve bandwidth and significantly reduce additional power consumption caused by cable routing on a switching network.

Refer to FIG. 8 and FIG. 18. FIG. 18 is a diagram of a structure of another optical/electrical module according to an embodiment of this application. The optical/electrical module may further include at least one of an optical fiber array unit (FAU) connected to an optical coupling interface of a chip, a trans-impedance amplifier (trans-impedance amplifier, TIA) connected to the chip, and a driver (driver) module connected to the chip. The optical fiber array unit is configured to fasten an optical fiber array. A transmitter in the chip is configured to connect to an output optical fiber, so that an optical signal generated by the transmitter is output to the outside of the chip through the output optical fiber. A receiver in the chip is configured to connect to an input optical fiber, so that an optical signal that passes through the input optical fiber can be received by the receiver and converted into an electrical signal. The driver module is connected to an electro-optic modulator, and is configured to provide a modulation signal. The modulation signal is applied to a modulation electrode pair, to modulate an optical carrier in a modulation waveguide based on the modulation signal, and load the modulation signal used as an electrical signal to the optical carrier. The trans-impedance amplifier is connected to a photodetector, and is configured to amplify an electrical signal generated by the photodetector.

Based on the chip and the optical/electrical module provided in the foregoing embodiments, an embodiment of this application further provides a communication device. FIG. 19 is a diagram of a structure of a communication device according to an embodiment of this application. The communication device includes the foregoing optical/electrical module, and the optical/electrical module includes the foregoing chip 10. The communication device further includes a processing chip, and the optical/electrical module is connected to the processing chip. The communication device may be a switch, a router, a server, or the like.

The processing chip may be an optical communication digital signal processing (optical digital signal processing, oDSP) chip. The processing chip may be connected to a driver module, and is configured to control the driver module to generate a modulation signal. The processing chip may be connected to a trans-impedance amplifier, and is configured to control the trans-impedance amplifier to amplify an electrical signal and process the amplified electrical signal.

Embodiments in this specification are all described in a progressive manner, for same or similar parts in embodiments, reference may be made to these embodiments, and each embodiment focuses on a difference from other embodiments.

The foregoing provides specific implementations of this application. It should be understood that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A chip, comprising:
a substrate, wherein a quantity of side walls of the substrate is greater than four; and
a transmitter and a receiver that are located on a first side of the substrate, wherein the transmitter is located in a first region of the substrate, and the receiver is located in a second region of the substrate; and
the first region is adjacent to the second region, and a part of the substrate located in the first region has a first side wall on a side that is of the first region and that faces the second region.

2. The chip according to claim 1, wherein the substrate has a second side wall on a side that is of the first region and that is away from the second region, the first side wall is disposed opposite to a first part of the second side wall, and the substrate has a third side wall located between the first side wall and the second side wall in the first region;
the substrate has a fourth side wall on a side that is of the second region and that is away from the first region, the fourth side wall is disposed opposite to a second part of the second side wall, and the substrate has a fifth side wall located between the fourth side wall and the first side wall in the second region; and
the substrate has a sixth side wall, a first part of the sixth side wall is disposed opposite to the third side wall, and a second part of the sixth side wall is disposed opposite to the fifth side wall.

3. The chip according to claim 2, wherein in a plane parallel to a surface of the substrate, a size of the first side wall is greater than or equal to half of a size of the second side wall.

4. The chip according to claim 2, wherein on the first side of the substrate, an optical coupling interface is disposed on at least one of the first side wall and the fifth side wall, and the optical coupling interface is configured to connect to an optical fiber array unit.

5. The chip according to claim 4, wherein projection space of the optical coupling interface on the substrate has a hollow region.

6. The chip according to claim 2, wherein
the substrate further comprises, in the first region, a seventh side wall and an eighth side wall that are connected between the fifth side wall and the first side wall; and/or
the substrate further comprises, in the second region, a ninth side wall and a tenth side wall that are connected between the fifth side wall and the first side wall.

7. The chip according to any one of claims 1 to 6, wherein the transmitter comprises an electro-optic modulator, the electro-optic modulator comprises a modulation waveguide and a modulation electrode pair on two sides of the modulation waveguide, and a material of the modulation electrode pair is transparent oxide.

8. The chip according to claim 7, wherein a material of the modulation waveguide is silicon, lithium niobate, indium phosphide, or tantalum niobate.

9. The chip according to claim 7, wherein projection space of the modulation waveguide on the substrate has a hollow region.

10. The chip according to any one of claims 1 to 6, further comprising:
a transmission waveguide, wherein the transmission waveguide is connected to at least one of the receiver and the transmitter; and
a dielectric layer, wherein the dielectric layer surrounds the transmission waveguide, the receiver, and the transmitter.

11. The chip according to claim 10, wherein the transmission waveguide comprises at least one of a first waveguide, a second waveguide, and a third waveguide, a material of the first waveguide is silicon, a material of the second waveguide is silicon nitride, and a material of the third waveguide is lithium niobate, indium phosphate, or tantalum niobate.

12. The chip according to claim 11, wherein the chip further comprises at least one of a first coupling structure, a second coupling structure, and a third coupling structure;
the first coupling structure comprises a first coupling portion of the first waveguide and a second coupling portion of the second waveguide, the second coupling portion is located on a side that is of the first coupling portion and that is away from the substrate, and the first coupling portion and the second coupling portion are configured to implement optical coupling between the first waveguide and the second waveguide;
the second coupling structure comprises a third coupling portion of the first waveguide and a fourth coupling portion of the third waveguide, the fourth coupling portion is located on a side that is of the third coupling portion and that is away from the substrate, and the third coupling portion and the fourth coupling portion are configured to implement optical coupling between the first waveguide and the third waveguide; and
the third coupling structure comprises a fifth coupling portion of the first waveguide, a sixth coupling portion of the second waveguide, and a seventh coupling portion of the third waveguide, wherein the sixth coupling portion is located on a side that is of the fifth coupling portion and that is away from the substrate, the seventh coupling portion is located on a side that is of the sixth coupling portion and that is away from the substrate, and the third coupling structure is configured to implement optical coupling between the second waveguide and the third waveguide.

13. The chip according to any one of claims 1 to 6, wherein the photodetector comprises a light absorption structure, and a first doped structure and a second doped structure that are respectively located on two sides of the light absorption structure, wherein a material of the light absorption structure is germanium, and doping types of the first doped structure and the second doped structure are opposite.

14. The chip according to any one of claims 1 to 6, further comprising:
at least one of a balanced-unbalanced converter and a junction structure that are located on the first side of the substrate, wherein the junction structure comprises a third doped structure and a fourth doped structure, and doping types of the third doped structure and the fourth doped structure are opposite.

15. The chip according to any one of claims 1 to 6, wherein the transmitter comprises at least one of an electro-optic modulator, a laser, and an optical amplifier, and the receiver comprises at least one of a photodetector and an optical amplifier.

16. An optical/electrical module, comprising a housing, a circuit board, and the chip according to any one of claims 1 to 15 that is connected to the circuit board, wherein the housing is configured to enclose the circuit board and the chip.

17. The optical/electrical module according to claim 16, wherein the optical/electrical module further comprises:
at least one of the optical fiber array unit connected to the optical coupling interface in the chip, a trans-impedance amplifier connected to the chip, and a driver module connected to the chip.

18. A communication device, comprising:
the optical/electrical module according to claim 16 or 17, and a processing chip, wherein the optical/electrical module is connected to the processing chip.
